# EUROPÄISCHE PATENTSCHRIFT

(11) **EP 0 803 757 B1**
(45) Veröffentlichungstag und Bekanntmachung des Hinweises auf die Patenterteilung: **07.05.2003**
(21) Anmeldenummer: 97102845.1
(22) Anmeldetag: 21.02.1997
(51) Int. Cl.: G02B 27/14, G02B 5/04, G02B 6/42, G02B 6/28, G02B 6/34, G02B 6/12

(54) **Optisches, strahlteilendes Bauelement sowie Verfahren zur Herstellung einer Prismenträgerplatte für ein solches Bauelement**
Optical beam-splitting element and process for manufacturing a prism support plate for such an element
Elément optique diviseur de faisceaux et procédé de fabrication d'un agencement de plaque-support des prismes pour un tel élément

(30) Priorität: 27.04.1996 DE 19616932
(43) Veröffentlichungstag der Anmeldung: 29.10.1997
(73) Patentinhaber: ROBERT BOSCH GMBH, 70442 Stuttgart (DE)
(72) Erfinder: Mueller-Fiedler, Roland, Dr., 71229 Leonberg (DE); Mayer, Klaus-Michael, Dr., 70839 Gerlingen (DE); Rech, Wolf-Henning, Dr., 71229 Leonberg (DE); Hauer, Heiner, 70734 Fellbach (DE); Kuke, Albrecht, Dr., 71549 Auenwald (DE); Schwander, Thomas, 71522 Backnang (DE)

(56) Entgegenhaltungen:
- EP-B- 0 178 203
- DE-A- 4 445 997
- DE-C- 4 300 652
- US-A- 5 263 111

## Beschreibung

### Stand der Technik

Die Erfindung geht aus von einem optischen, strahlteilenden Bauelement nach dem Oberbegriff des Anspruchs 1 sowie einem Verfahren zur Herstellung einer Prismenträgerplatte nach dem Oberbegriff des Anspruchs 8. Ein entsprechendes Bauelement ist aus der EP 178 203 B1 bekannt.

Aus der US 5, 170, 448 ist eine integriert-optische. Anordnung mit einem Wellenleiter bekannt. Im Bereich des Wellenleiters ist eine V-Nut angeordnet.

Die EP 0192 850 A1 zeigt eine monolithisch-integrierte Anordnung bei der Wellenleiter und Photodetektor unmittelbar auf dem Halbleitersubstrat erzeugt sind.

### Vorteile der Erfindung

Das erfindungsgemäße optische, strahlteilende Bauelement mit den Merkmalen des Anspruchs 1 hat demgegenüber den Vorteil, daß es besonders kostengünstig und aufwandsarm herstellbar ist. Des weiteren ist der Prismenkörper sehr einfach herstellbar und erlaubt eine einfache Anbringung und Justierung der Ablenkschicht.

Durch die in den abhängigen Ansprüchen 2 bis 7 angegebenen Maßnahmen sind Verbesserungen und Weiterbildungen des im Anspruch 1 angegebenen optischen, strahlteilenden Bauelements möglich.

Werden die Lichtwellenleiter mittels einer Lichtwellenleiterhalteplatte gehaltert, so erhöht sich die mechanische Stabilität und damit die Zuverlässigkeit des optischen, strahlteilenden Bauelements. Zudem vereinfacht sich das Verfahren zum Herstellen des optischen, strahlteilenden Bauelements, da mittels der Lichtwellenleiterhalteplatte zum einen eine Justierung der Lichtwellenleiter erfolgen kann und zum anderen eine Möglichkeit gegeben ist, den Prismenkörper gegenüber den Lichtwellenleitern zu justieren.

Wenn die Lichtwellenleiterhalteplatte wenigstens eine Justiernut für die Lichtwellenleiter aufweist, so vereinfacht sich der Justageaufwand, da dadurch keine aktiven Justierverfahren notwendig sind.

Ebenso läßt sich mittels Justierelementen auf der Prismenträgerplatte und Gegenjustierelementen auf der Lichtwellenleiterhalteplatte eine passive Justierung der Prismenträgerplatte gegenüber der Lichtwellenleiterhalteplatte erzielen, wodurch auch automatisch der Prismenkörper in bezug auf die Lichtwellenleiter justiert ist. Auch hier ist kein aktives Justierverfahren notwendig.

Die Ausgestaltung des Justierelements in Dachfirstform stellt insofern eine vorteilhafte Maßnahme dar, als diese Form einen besonders genauen Selbstjustageeffekt beinhaltet und durch anisotropes Ätzen herstellbar ist.

Das Anordnen eines optischen Detektors im Reflexionsbereich der Ablenkschicht ergibt ein vorteilhaftes Einsatzfeld für das optische, strahlteilende Bauelement, da dieses somit beispielsweise als Sende-Empfangs-Bauelement einsetzbar ist.

Wird der optische Detektor auf der den Lichtwellenleitern gegenüberliegenden Seite der Lichtwellenleiterhalteplatte angeordnet, so ist eine photolithographische Strukturierung zur Herstellung von Leiterbahnen hier besonders einfach möglich.

Weist die Prismenträgerplatte wenigstens ein Justierelement auf, so bringt sie den Vorteil mit sich, für eine passive Justierung auf einem Körper mit Gegenjustierelementen geeignet zu sein.

Die Wahl der Dachfirstform für das Justierelement stellt außerdem einen Vorteil dar, da zum einen die Dachfirstform besonders einfach herstellbar ist und zum anderen einen besonders präzisen Selbstjustiereffekt aufweist.

Das erfindungsgemäße Verfahren zur Herstellung einer Prismenträgerplatte mit den Merkmalen des Anspruchs 8 ist deswegen vorteilhaft, weil zum einen ein Material für den plattenförmigen Grundkörper ausgesucht werden kann, welches ungeachtet seiner optischen Eigenschaften besonders gut bearbeitbar ist, und zum anderen durch Verwendung des plattenförmigen Grundkörpers als Masterstruktur eine hohe Anzahl von Tochterstrukturen als Prismenträgerplatten durch ein wesentlich einfacheres und kostengünstigeres Abformverfahren hergestellt werden kann, als die Masterstruktur.

Durch die in den abhängigen Ansprüchen 9 bis 11 angegebenen Maßnahmen sind Verbesserungen und Weiterbildungen des im Anspruch 8 angegebenen Verfahrens möglich.

Durch Herstellung der invers-prismenförmigen Vertiefung mittels anisotropem Ätzen läßt sich die natürliche Schrägflankenbildung kristalliner Materialien für die Bildung von Schrägflächen für den herzustellenden Prismenkörper ausnutzen.

Die Herstellung der Prismenträgerplatte in 3. Generation stellt ein vorteilhaftes Optimum eines Kompromisses zwischen der Massenfertigung der Prismenträgerplatte und der Genauigkeit bei deren Abformung dar.

Das Herstellen einer in 1. Generation hergestellten Zwischenhilfsplatte aus einem Metall, welches aus einer aufgedampften Metallschicht und einer galvanisierten Schicht besteht, ist zum einen sehr kostensparend und zum anderen sehr exakt, was sie Abformung betrifft, so daß eine hohe Genauigkeit für die davon abzuformenden Prismenträgerplatten erhältlich ist.

### Zeichnung

Ausführungsbeispiele der Erfindung sind in der Zeichnung dargestellt und in der nachfolgenden Beschreibung näher erläutert. Es zeigen:
Figur 1 einen Querschnitt durch eine schematische Darstellung eines ersten Ausführungsbeispiels für ein optisches, strahlteilendes Bauelement,
Figur 2 einen Querschnitt durch eine schematische Darstellung eines zweiten Ausführungsbeispiels eines optischen, strahlteilenden Bauelements,
Figur 3 eine Explosionsdarstellung eines Ausführungsbeispiels eines optischen, strahlteilenden Bauelements,
Figur 4 einen plattenförmigen Grundkörper mit einer aufgedampften Metallschicht,
Figur 5 eine Zwischenhilfsplatte.

### Beschreibung der Ausführungsbeispiele

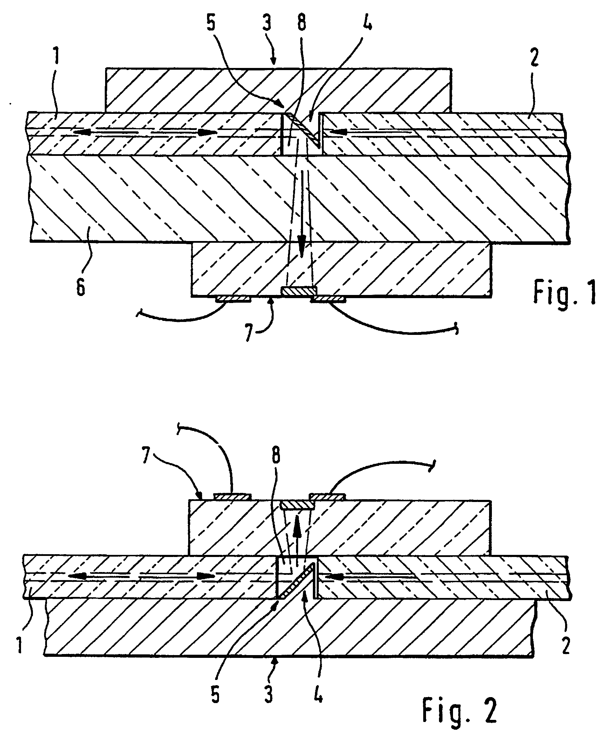

In Figur 1 ist ein erster Lichtwellenleiter 1 in Flucht mit einem zweiten Lichtwellenleiter 2 auf einer Lichtwellenleiterhalteplatte 6 angeordnet. Die beiden Lichtwellenleiter 1, 2 sind in Form von Glasfasern ausgeführt und weisen zwischen ihren Stirnflächen eine Aussparung 8 auf. Auf die Lichtwellenleiter 1, 2 aufgesetzt, ist eine Prismenträgerplatte 3 vorgesehen, an deren Unterseite ein Prismenkörper 4 angeordnet ist, der in die Aussparung 8 ragt. In den Lichtwellenleiteren 1, 2 werden Lichtsignale geführt. Der Prismenkörper 4 weist in diesem Beispiel einen dreieckigen Querschnitt auf, wobei die Hypothenuse des Dreiecks in einer Schrägfläche liegt, auf der eine Ablenkschicht 5 aufgebracht ist. Die Ablenkschicht 5 ist zur Ausbreitungsrichtung der Lichtsignale geneigt. Unterhalb der Lichtwellenleiterhalteplatte 6 ist ein optischer Detektor 7 angeordnet, dessen aktive Zone in etwa senkrecht unterhalb des Prismenkörpers 4 angeordnet ist.

Beispielhaft sind hier zwei Lichtsignale mit unterschiedlichen Wellenlängen angegeben, wobei im zweiten Lichtwellenleiter Licht der Wellenlänge λ = 1310 Nanometer in Richtung auf den Prismenkörper 4 geführt wird. Außerdem wird im ersten Lichtwellenleiter 1 Licht der Wellenlänge λ = 1550 Nanometer auf den Prismenkörper 4 zugeführt. Das Lichtsignal mit der Wellenlänge λ = 1550 Nanometer gelangt zur Ablenkschicht 5, die eine Ablenkung des Lichtweges des Lichtsignals bewirkt, und zwar in der Gestalt, daß das abgelenkte Lichtsignal auf die aktive Zone des optischen Detektors 7 fällt. Das an der Ablenkschicht 5 abgelenkte Lichtsignal durchdringt dabei die Lichtwellenleiterhalteplatte 6, die zumindest für diesen Lichtwellenbereich transparent sein muß. Das Lichtsignal mit der Wellenlänge λ = 1310 Nanometer durchdringt den zumindest für diesen Wellenlängenbereich transparenten Prismenkorper 4 sowie auch die Ablenkschicht 5 und gelangt somit in Fortsetzung seines ursprünglichen Lichtweges in den ersten Lichtwellenleiter 1.

Das hier nur schematisch dargestellte optische, strahlteilende Bauelement ist somit geeignet, Lichtsignale verschiedener Wellenlängen getrennt voneinander zu behandeln, indem diese selektiv an der Ablenkschicht 5 entweder transmittiert oder reflektiert werden. Beispielsweise ist das Lichtsignal mit der Lichtwellenlänge λ = 1550 Nanometer ein empfangenes, moduliertes Lichtsignal, während das Lichtsignal mit der Lichtwellenlänge λ = 1310 Nanometer ein noch unmoduliertes Sendesignal ist.

In Figur 2 ist ein weiteres Ausführungsbeispiel schematisch dargestellt. Es unterscheidet sich von der in Figur 1 gezeigten Darstellung durch folgende Punkte: Die Lichtwellenleiter 1, 2 sind nicht mehr auf einer Lichtwellenleiterhalteplatte 6 gehaltert, sondern direkt mit der Prismenträgerplatte 3 verbunden. Der optische Detektor 7 ist dementsprechend direkt an die Lichtwellenleiter 1, 2 herangeführt und mit ihnen verbunden.

Das Lichtsignal mit der Lichtwellenlänge λ = 1550 Nanometer muß in diesem Beispiel bis zum optischen Detektor 7 einen geringeren Weg zurücklegen und wird dabei weniger stark aufgeweitet. Dadurch ist diese Anordnung besonders für kleinflächigere Photodetekten geeignet.

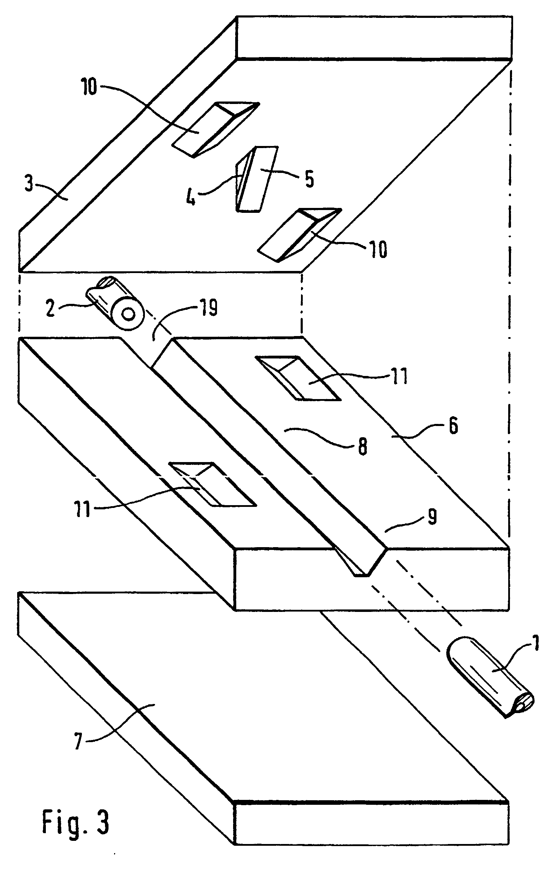

In der in Figur 3 gezeigten Explosionsdarstellung bezeichnen gleiche Bezugszeichen gleiche Elemente wie in den Figuren 1 und 2. Die Prismenträgerplatte 3 weist auch hier den Prismenkörper 4 in Form eines Keils auf, auf dessen Schrägfläche die Ablenkschicht 5 aufgebracht ist. Links und rechts einer trapez-förmigen Nut 9 zur Aufnahme der Lichtwellenleiter 1, 2 und des Prismenkörpers 4 sind zudem zwei dachförmige Justierelemente 10 vorgesehen. Auf der Lichtwellenleiterhalteplatte 6 sind invers-dachfirstförmige Gegenjustierelemente 11 angeordnet. Unterhalb der Lichtwellenleiterhalteplatte 6 ist im Bereich des Prismenkörpers 4 ein optischer Detektor 7 vorgesehen (nicht dargestellt). Anstelle einer durchgehenden Nut 9 kann im Bereich des Prismenkörpers 4 auch eine Wanne vorgesehen sein. Die Nut 9 bildet gleichzeitig die Aussparung zwischen den Lichtwellenleitern 1 und 2.

Die Anordnung ist so dimensioniert, daß beim Auflegen der Prismenträgerplatte 3 auf die Lichtwellenleiterhalteplatte 6 jeweils die Justierelemente 10 über den Gegenjustierelementen 11 zu liegen kommen. Beim Einlegen der Lichtwellenleiter 1, 2 in die invers-dachfirstförmigen Justiernut 9 werden diese selbsttätig, also durch passive Justierung, in ihrer Position festgelegt. Dann erfolgt ein Aufsetzen der Prismenträgerplatte 3 auf diese Anordnung, wobei der Prismenkörper 4 einen Platz innerhalb der Nut 9 einnimmt. Zusätzlich wird beim Zusammenfügen ein Polymerklebstoff zwischen die Prismenträgerplatte 3 und die Lichtwellenleiterhalteplatte 6 eingebracht, der im Brechungsindex möglichst genau demjenigen der Prismenträgerplatte 3 entspricht, um eine Lichtablenkung an der schrägen Grundfläche zu vermeiden.

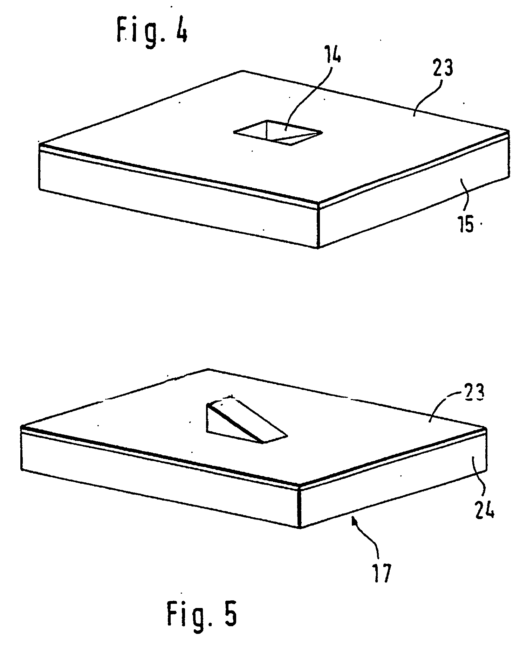

In Figur 4 ist ein plattenförmiger Grundkörper 15 dargestellt, der eine invers prismenförmige Vertiefung 14 aufweist. Auf der Oberseite dieses plattenförmigen Grundkörpers ist eine dünne Metallschicht 23 aufgedampft worden.

Der plattenförmige Grundkörper 15 dient hierbei als erste Generation zur Herstellung der Prismenträgerplatte 3. Die aufgedampfte Metallschicht 23 dient dazu, in einem folgenden Verfahrensschritt, dessen Ergebnis in Figur 5 dargestellt ist, eine Galvanikschicht 24 aufzubringen. Nach diesem Schritt ist eine Zwischenhilfsplatte 17 entstanden. Der plattenförmige Grundkörper 15 kann dann aufgelöst werden, z. B. in KOH, falls er aus Silizium besteht oder durch Pyrolyse, falls er aus einem Kunststoff, z. B. PMMA, besteht. Die Zwischenhilfsplatte 17 besteht hier beispielhaft rein aus Metall und stellt als erste Generation (einmal abgeformt) eine Masterstruktur für die herzustellende Prismenträgerplatte 3 dar. Durch ungeradzahlige Generationenfolge lassen sich nun von der Zwischenhilfsplatte 17 mehrere Prismenträgerplatten 3, die in ihrer Gestalt der Zwischenhilfsplatte 17 entsprechen, abformen. Als Material für den plattenförmigen Grundkörper 15 eignet sich insbesondere ein Halbleiter, vorzugsweise Silizium, da zur Strukturierung der Oberflächen von Halbleitern bereits ausreichende Kenntnisse und Verfahren bestehen, mit denen die gewünschten Strukturen, insbesondere die invers prismenförmige Vertiefung zur Herstellung des Prismenkörpers 4, hergestellt werden können. Durch die Art der Herstellung mit mehreren Generationen entstehen folgende Vorteile: Jede der Prismenträgerplatte 3 vorhergehende Generation läßt eine Materialauswahl zu, die keine Rücksicht auf die optischen Eigenschaften des Materials erfordert. Erst die endgültige Abformung der Prismenträgerplatte 3 bedingt, daß für die Prismenträgerplatte 3 selbst ein Material verwendet wird, welches die zur Herstellung des optischen, strahlteilenden Bauelements erforderlichen optischen Eigenschaften aufweist. Daher hat es sich hierbei als vorteilhaft erwiesen, für die Masterstruktur Silizium und für die erste Generation ein Metall zu verwenden. Auch als Material für die zweite Generation eignet sich Metall; insbesondere Nickel. Außerdem muß auf diese Weise der Generationen-Abformung nicht jede Prismenträgerplatte 3 einzeln strukturiert werden, sondern läßt sich durch Abformen von einer einzigen Masterstruktur in vielfacher Anzahl herstellen, wobei lediglich die Masterstruktur selbst mit dem entsprechenden Verfahren strukturiert werden muß. Somit lassen sich aus einem plattenförmigen Grundkörper 15 bereits mehrere Zwischenhilfsplatten 17 und wiederum von jeder Zwischenhilfsplatte 17 mehrere zweite Generationen herstellen, von denen wiederum mehrere Prismenträgerplatten 3 herstellbar sind. Es empfiehlt sich jedoch, eine nicht zu hohe Generationsfolge bis zur endgültigen Herstellung der Prismenträgerplatte 3 zu verwenden, da mit der Erhöhung der Anzahl der Generationen auch eine Erniedrigung der Abformgenauigkeit einhergeht. Es hat sich daher als optimaler Kompromiß erwiesen, die dritte Generation als Prismenträgerplatte 3 zu verwenden.

Als Form für den Prismenkörper 4 sind auch andere Gestaltungen vorgesehen, wie z.B. verschiedenartige Polyeder. Die Ablenkschicht 5 kann so dimensioniert werden, daß sie beliebige Lichtwellenbereiche selektiv behandelt. Ebenso können mehrere Ablenkschichten 5 bzw. Prismenkörper 4 hintereinander oder nebeneinander angeordnet sein, um mehrere Selektionen zu ermöglichen.

## Patentansprüche

1. Optisches, strahlteilendes Bauelement mit zwei Lichtwellenleitern (1, 2) und mit einer zur Ausbreitungsrichtung von Lichtsignalen geneigten Ablenkfläche, die zwischen den zwei die Lichtsignale führenden Lichtwellenleitern (1, 2) angeordnet ist, wobei eine Prismenträgerplatte (3) mit einem darauf angeordneten, schrägflächigen, wenigstens teilweise transparenten Prismenkörper (4) vorgesehen ist, welcher die Ablenkfläche trägt und welcher in eine Aussparung (8) zwischen den Lichtwellenleitern (1, 2) ragt, **dadurch gekennzeichnet, dass** die Ablenkfläche (5) auf einer teilweise transparenten Ablenkschicht (5) ausgebildet ist, die auf einer der Schrägflächen des Prismenkörpers (4) aufgebracht ist.

2. Optisches, strahlteilendes Bauelement nach Anspruch 1, **dadurch gekennzeichnet, dass** die Lichtwellenleiter (1, 2) auf oder wenigstens teilweise in einer wenigstens teilweise transparenten Lichtwellenleiterhalteplatte (6) angeordnet sind.

3. Optisches, strahlteilendes Bauelement nach Anspruch 2, **dadurch gekennzeichnet, dass** die Prismenträgerplatte (3) auf der Lichtwellenleiterhalteplatte (6) aufliegt.

4. Optisches, strahlteilendes Bauelement nach Anspruch 3, **dadurch gekennzeichnet, dass** die Lichtwellenleiterhalteplatte (6) wenigstens eine Justiernut (9, 19) zur wenigstens teilweisen Aufnahme wenigstens eines der Lichtwellenleiter (1, 2) aufweist.

5. Optisches, strahlteilendes Bauelement nach Anspruch 4, **dadurch gekennzeichnet, dass** die Prismenträgerplatte (3) wenigstens ein Justierelement (10) aufweist, das beim Auflegen auf die Lichtwellenleiterhalteplatte (6) mit den Lichtwellenleitern (1, 2) in wenigstens ein entsprechendes Gegenjustierelement (11) an der Lichtwellenleiterhalteplatte (6) eingreift.

6. Optisches, strahlteilendes Bauelement nach Anspruch 4 oder 5, **dadurch gekennzeichnet, dass** das wenigstens eine Justierelement (10) dachfirstförmig geformt ist.

7. Optisches, strahlteilendes Bauelement nach einem der vorhergehenden Ansprüche, **dadurch gekennzeichnet, dass** im Reflexionsbereich der Ablenkschicht (5) ein optischer Detektor (7) angeordnet ist.

8. Optisches, strahlteilendes Bauelement nach Anspruch 7, **dadurch gekennzeichnet, dass** der optische Detektor (7) auf der den Lichtwellenleitern (1, 2) gegenüberliegenden Seite der Lichtwellenleiterhalteplatte (6) angeordnet ist.

9. Optisches, strahlteilendes Bauelement nach einem der vorhergehenden Ansprüche, **dadurch gekennzeichnet, dass** die der Aussparung (8) zuweisenden Stirnseiten der Lichtwellenleiter (1, 2) parallel gegenüberliegend angeordnet sind.

10. Verfahren zur Herstellung einer Prismenträgerplatte (3) für ein optisches, strahlteilendes Bauelement nach einem der Ansprüche 1 bis 9, **dadurch gekennzeichnet, dass** in einem ersten Verfahrensschritt ein plattenförmiger Grundkörper (15) vorzugsweise aus Silizium mit einer inversprismenförmigen Vertiefung (14) als erste Generation einer Abformung hergestellt wird, und dass davon die Prismenträgerplatte (3) durch mindestens eine weitere Abformung hergestellt wird.

11. Verfahren zur Herstellung einer Prismenträgerplatte nach Anspruch 10, **dadurch gekennzeichnet, dass** die inversprismenförmige Vertiefung (14) durch anisotropes Ätzen hergestellt wird.

12. Verfahren zur Herstellung einer Prismenträgerplatte nach Anspruch 10 oder 11, **dadurch gekennzeichnet, dass** die Prismenträgerplatte (3) in dritter Generation abgeformt wird.

13. Verfahren zur Herstellung einer Prismenträgerplatte nach einem der Ansprüche 10 bis 12, **dadurch gekennzeichnet, dass** eine in erster Generation hergestellte Zwischenhilfsplatte (17) aus einem Metall hergestellt wird, das durch Galvanisieren einer auf den plattenförmigen Grundkörper (15) aufgedampften Metallschicht (23) auf den plattenförmigen Grundkörper (15) hergestellt wird.

## Claims

1. Optical, beam-splitting component having two optical conductors (1, 2) and having a deflecting surface, which is inclined to the direction of propagation of light signals and is arranged between the two optical conductors (1, 2) conducting the light signals, there being provided a prism carrier plate (3) having, arranged thereon, an at least partially transparent prismatic body (4), which has an oblique face and carries the deflecting surface and which projects into a cutout (8) between the optical conductors (1, 2), **characterized in that** the deflecting surface (5) is formed on a partially transparent deflecting layer (5) which is applied to one of the oblique faces of the prismatic body (4).

2. Optical, beam-splitting component according to Claim 1, **characterized in that** the optical conductors (1, 2) are arranged on or at least partially in an at least partially transparent optical conductor holding plate (6).

3. Optical, beam-splitting component according to Claim 2, **characterized in that** the prism carrier plate (3) rests on the optical conductor holding plate (6).

4. Optical, beam-splitting component according to Claim 3, **characterized in that** the optical conductor holding plate (6) has at least one adjusting groove (9, 19) for at least partially holding at least one of the optical conductors (1, 2).

5. Optical, beam-splitting component according to Claim 4, **characterized in that** the prism carrier plate (3) has at least one adjusting element (10) which, when laid upon the optical conductor holding plate (6), engages with the optical conductors (1, 2) in at least one corresponding mating adjusting element (11) on the optical conductor holding plate (6).

6. Optical, beam-splitting component according to Claim 4 or 5, **characterized in that** the at least one adjusting element (10) is in the shape of a roof ridge.

7. Optical, beam-splitting component according to one of the preceding claims, **characterized in that** an optical detector (7) is arranged in the reflection region of the deflecting layer (5).

8. Optical, beam-splitting component according to Claim 7, **characterized in that** the optical detector (7) is arranged on the side of the optical conductor holding plate (6) situated opposite the optical conductors (1, 2).

9. Optical, beam-splitting component according to one of the preceding claims, **characterized in that** the end faces, pointing to the cutout (8), of the optical conductors (1, 2) are arranged parallel opposite one another.

10. Method for producing a prism carrier plate (3) for an optical, beam-splitting component according to one of Claims 1 to 9, **characterized in that** in a first method step a plate-shaped basic body (15), preferably made from silicon, with an inverse prismatic depression (14) is produced as the first generation of a moulding process, and **in that** the prism carrier plate (3) is produced therefrom by at least one further moulding operation.

11. Method for producing a prism carrier plate according to Claim 10, **characterized in that** the inverse prismatic depression (14) is produced by anisotropic etching.

12. Method for producing a prism carrier plate according to Claim 10 or 11, **characterized in that** the prism carrier plate (3) is moulded in a third generation.

13. Method for producing a prism carrier plate according to one of Claims 10 to 12, **characterized in that** an intermediate auxiliary plate (17) produced in the first generation is produced from a metal which is produced on the plate-shaped basic body (15) by electroplating a metal layer (23) vapour-deposited onto the plate-shaped basic body (15).

## Revendications

1. Composant optique diviseur de faisceaux ayant deux guides de lumière (1, 2) et une surface déflectrice inclinée par rapport à la direction de développement des signaux lumineux, cette surface déflectrice étant installée entre les deux guides de lumière (1, 2) transmettant les signaux lumineux,
une plaque de support de prismes (3) portant un corps de prismes (4) incliné, installé sur la plaque et qui est au moins en partie transparent, porte la surface déflectrice et vient en saillie dans un intervalle (8) entre les guides de lumière (1, 2),
**caractérisé en ce que**
la surface déflectrice (5) est réalisée sur une couche déflectrice (5) partiellement transparente, appliquée sur l'une des surfaces inclinées du corps de prismes (4).

2. Composant optique diviseur de faisceaux selon la revendication 1,
**caractérisé en ce que**
les guides de lumière (1, 2) sont installés sur au moins ou en partie dans une plaque de support de guide de lumière (6) au moins partiellement transparente.

3. Composant optique diviseur de faisceaux selon la revendication 2,
**caractérisé en ce que**
la plaque de support de prismes (3) est appliquée sur la plaque de support de guide de lumière (6).

4. Composant optique diviseur de faisceaux selon la revendication 3,
**caractérisé en ce que**
la plaque de support de guide de lumière (6) comporte au moins une rainure d'ajustage (9, 19) pour recevoir au moins en partie au moins l'un des guides de lumière (1, 2).

5. Composant optique diviseur de faisceaux selon la revendication 4,
**caractérisé en ce que**
la plaque de support de prismes (3) comporte au moins un élément d'ajustage (10) qui, lorsqu'il est appliqué sur la plaque de support de guide de lumière (6) pénètre avec les guides de lumière (1, 2) dans au moins un élément d'ajustage complémentaire (11) correspondant de la plaque de support de guide de lumière (6).

6. Composant optique diviseur de faisceaux selon la revendication 4 ou 5,
**caractérisé en ce qu'**
au moins un élément d'ajustage (10) en forme de faîtage de toit.

7. Composant optique diviseur de faisceaux selon l'une quelconque des revendications précédentes,
**caractérisé**
**par** un détecteur optique (7) prévu dans la zone de réflexion des la couche réflectrice (5).

8. Composant optique diviseur de faisceaux selon la revendication 7,
**caractérisée en ce que**
le détecteur optique (7) est prévu sur le côté de la plaque de support de guide de lumière (6) opposée au guide de lumière (1, 2).

9. Composant optique diviseur de faisceaux selon l'une quelconque des revendications précédentes,
**caractérisé en ce que**
les faces frontales des guides de lumière (1, 2) tournés vers l'intervalle (8) sont parallèles.

10. Procédé de réalisation d'une plaque de support de prismes (3) pour un composant optique diviseur de faisceaux selon l'une quelconque des revendications 1 à 9,
**caractérisé en ce que**
dans une première étape de procédé, on réalise un corps de base en forme de plaque (15) de préférence en silicium avec une cavité (14) en forme de prisme inverse comme première génération de moulage et à partir de celle-ci, on réalise la plaque de support de prismes (3) en procédant à au moins un autre moule.

11. Procédé de fabrication d'une plaque de support de prismes selon la revendication 10,
**caractérisé en ce que**
la cavité (14) en forme de prismes inverse est réalisée par attaque chimique anisotrope.

12. Procédé de fabrication d'une plaque de support de prismes selon la revendication 10 ou 11,
**caractérisé en ce que**
la plaque de support de prismes (3) est moulée comme troisième génération .

13. Procédé de fabrication d'une plaque de support de prismes selon l'une quelconque des revendications 10 à 12,
**caractérisé en ce qu'**
une plaque auxiliaire intermédiaire (17) fabriquée dans la première génération est réalisée en métal par galvanisation d'une couche métallique (23) déposée à la vapeur sur le corps de base (15) en forme de plaque.
